# EUROPEAN PATENT SPECIFICATION

(11) **EP 1 649 956 B1**
(45) Date of publication and mention of the grant of the patent: **07.03.2007**
(21) Application number: 05109739.2
(22) Date of filing: 19.10.2005
(51) Int. Cl.: B23B 31/30

(54) **Hydraulically operated friction-type connection**
Hydraulisch betätigte Reibungsverbindung
Raccord à frottement avec actionnement hydraulique

(30) Priority: 21.10.2004 SE 0402550
(43) Date of publication of application: 26.04.2006
(73) Proprietor: ETP TRANSMISSION AB, 581 11 Linköping (SE)
(72) Inventor: Rosberg, Niclas, 603 65 Norrköping (SE)
(74) Representative: Willquist, Bo Lorentz

(56) References cited:
- WO-A-95/29029
- DE-A1- 2 719 655
- GB-A- 2 224 678

## Description

The present invention relates to a hydraulically operated friction joint according to the preamble of claim 1 and as known, e.g. from WO 95/29029.

### Background of the invention

WO94/26448 shows a tool adapter for machine tools, which comprises a hydraulically operated friction joint. The tool adapter has an elongated, basically cylindrical adapter body, which at a first tool-receiving end has an axial hole into which a shank of a tool, such as a boring or milling tool, can be inserted. The tool-receiving end has a clamping element for the tool, comprising a hydraulic clamping bush having a relatively thin, internal clamping sleeve, which is fixed in the axial hole, so that a pressure gap is formed between the clamping sleeve and the hole. A pressure medium, which when pressurised produces a change in the radial shape of the clamping sleeve, so that a pressure occurs between a tool accommodated in the axial hole and the clamping sleeve, is provided in the gap.

The tool adapter has a second end opposite the tool-receiving end, which is designed to be fixed in a tool holder of the machine tool, often referred to as a "chuck". The tool adapter has a piston displaceable in a cylindrical space. The cylindrical space has a fluid connection to the pressure gap between the axial hole and the clamping sleeve, so that the pressure in the gap can be controlled by displacement of the piston in the cylindrical space in the axial direction of the piston.

One problem with hydraulically operated friction joints of the type shown in WO94/26448 or WO 95/29029 is ensuring that they contain the right quantity of pressure medium, so that the stroke length of the piston will allow the pressure of the pressure medium to be adjusted between a state in which the tool is fixed and a state in which the tool is releasable, without the risk of the pressure chamber being exposed to unduly high pressures.

There is therefore a need for an improved or alternative hydraulically operated friction joint.

### Summary of the invention

The aforementioned object is fully or partially achieved by a hydraulically operated friction joint according to the independent patent claim attached. Embodiments are set forth in the dependent claims and in the following description of the drawings attached.

A hydraulically operated friction joint is therefore provided, which comprises an outer sleeve designed to be inserted into a basically cylindrical recess, an inner sleeve arranged in the outer sleeve and designed to receive a basically cylindrical body, a pressure gap formed between the inner sleeve and outer sleeve and containing a pressure medium, which is designed when pressurised to change the radial shape of the inner sleeve, so that a pressure is produced between the inner sleeve and the cylindrical body, and a piston, which through a fluid connection with the pressure gap is designed to produce said pressurisation of the pressure gap. A distinctive feature of the hydraulically operated friction joint is that elements for adjusting the quantity of pressure medium are integrated into the piston.

By integrating elements for adjusting the quantity of pressure medium into the piston it is possible to produce a compact, space-saving arrangement for adjusting the quantity of pressure medium and for regulating the pressure in the pressure gap. This means, for example, that there is no need to provide a separate adjusting duct with adjusting valve.

In one embodiment the piston is displaceable in a space having a fluid connection to the pressure gap. In this embodiment the piston has a first end designed to define the space, a second end, a duct extending between said first second ends for adjusting/tapping off the pressure medium, and a controllable valve element arranged in the duct.

The valve element may comprise a valve body, which interacts with a valve seat formed in the duct. The valve body may comprise a basically spherical body and the valve seat may comprise a basically conical surface.

The valve element may have a control element designed, with the piston as bracing counter-element, to control the interaction of the valve body with the valve seat. The valve control element may comprise a screw threaded into the piston, one end of the screw interacting with the valve body and the other end being designed for engagement with an operating tool, such as a screwdriver, Allen key or the like.

The hydraulically operated friction joint may furthermore comprise a control part for adjusting the position of the piston in the space. The control part may be integrally formed with the piston. Alternatively the control part and the piston may be two separately formed parts interacting with one another. This is advantageous, since the piston is thereby not screwed in with the attendant risk of cutting. The control part may also be designed for engagement with an operating tool.

According to one embodiment the hydraulically operated friction joint is designed as a tool adapter, the outer sleeve being integrated with an elongated adapter body, so that a first end of the tool adapter has an axial hole, in which said inner sleeve is arranged as a clamping sleeve, and which is designed to receive a tool, so that when the pressure gap is pressurised the tool is fixed in the axial hole; and so that a second end of the tool adapter is designed to be fixed in a tool holder.

In a tool adapter according to this embodiment the adjusting element can be arranged at the second end of the tool adapter, it being possible to design the tool adapter without a radial flange, also referred to as a "collar", which affords the facility for selecting how far the tool adapter is to be inserted into a tool holder, so that the projecting part of the tool adapter can be optimised having regard to the intended extension length and maximum stability. In tool adapters having a radial flange the latter tends to restrict the depth to which the tool adapter can be inserted into the tool holder.

According to another embodiment the hydraulically operated friction joint is designed as a hub-shaft connection, the outer sleeve and the inner sleeve basically being concentrically arranged, having basically the same axial length and being designed to produce a respective pressure between the outer sleeve and a hub arranged around this, and between the inner sleeve and a shaft arranged therein.

In such a hub-shaft connection a radial flange can be eliminated, it being possible, for example, to arrange the adjusting element in an axially projecting flange. This makes it possible to provide a hub-shaft connection having a smaller mass moment of inertia.

### Brief description of the drawings

The hydraulically operated friction joint will now be described in more detail with reference to the drawings attached.

Fig. 1a shows a schematic representation of a hydraulically operated friction joint in the form of a tool adapter 1, provided with a tool V and arranged in a tool holder C.

Figs. 1b and 1c show schematic perspective views of one embodiment of the tool adapter 1.

Fig. 2 shows a schematic sectional view of the tool adapter 1 in Figs. 1b and 1c.

Fig. 3 shows a schematic, partially sectional and enlarged view of one embodiment of a piston 10 and a control part 20.

Fig. 4a shows schematic sectional view of a hydraulically operated friction joint in the form of a hub-shaft connection 1' designed to couple a shaft A and a hub N together.

Fig. 4b shows a schematic perspective view of a hub-shaft connection 1'.

Figs. 4c-4d show schematic sectional views of the hub-shaft connection 1'.

### Description of embodiments

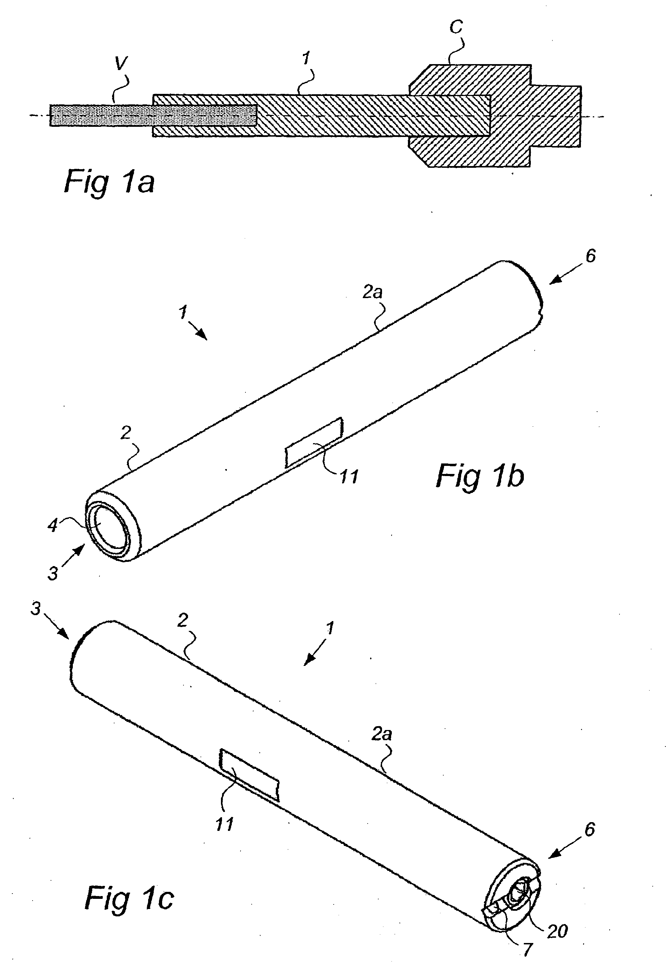

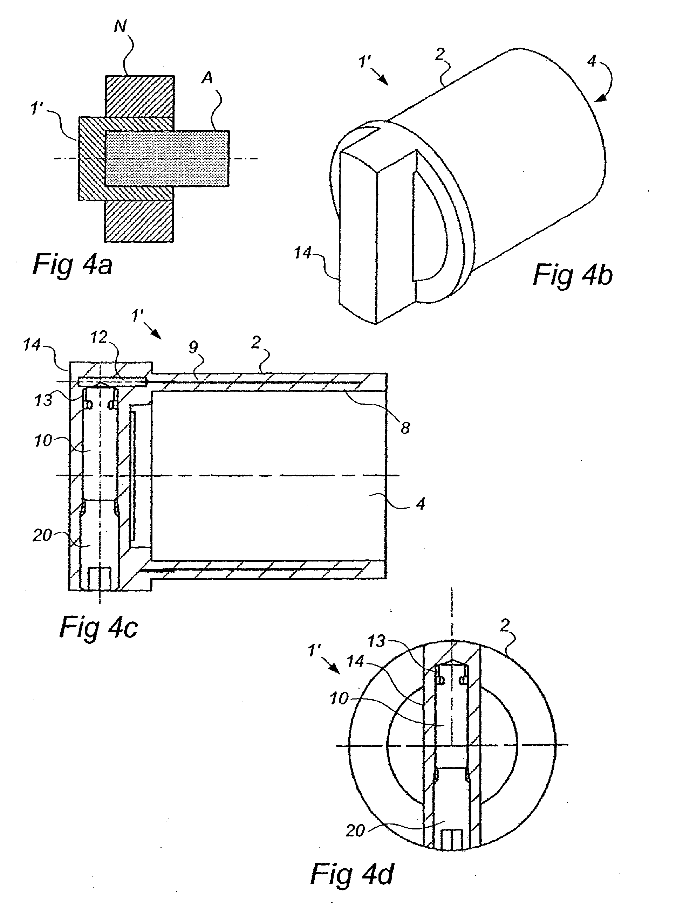

The invention will be described with reference to two different, non-restrictive embodiments: a tool adapter (Fig. 1a - Fig. 3) and a hub-shaft connection (Fig. 4a - Fig. 4d).

Fig. 1a shows in schematic form how a tool adapter 1 is fixed in a tool holder C and how a tool V is fixed in the tool adapter 1.

Fig. 1b shows a tool adapter 1, which comprises an elongated, basically cylindrical adapter body 2a, viewed from beneath, so that an axial hole 4 arranged at a first end 3 of the tool adapter for receiving a tool (not shown) is visible.

Fig. 1c shows the tool adapter 1 viewed obliquely from behind, so that the second end 6 of the tool adapter 2a, which is designed to be fixed in a tool holder or chuck (not shown) is visible. Visible in Fig. 1 are a control part 20 for controlling a pressure in a pressure gap provided in the tool adapter, and a cooling duct 7 for delivering coolant to a tool accommodated in the axial hole. The second end 6 of the tool adapter is designed to be fixed in a tool holder. The second end 6 may therefore have a basically cylindrical surface, with or without a friction-modifying coating, or alternatively it may take the form of a gripping element, which permits a basically interlocking engagement with a tool holder.

Also visible in Figs. 1b and 1c are engagement surfaces 11 arranged on opposite sides of the adapter body 2a and designed to transmit a torque to the adapter body 2a, for example by means of an adjustable spanner or the like.

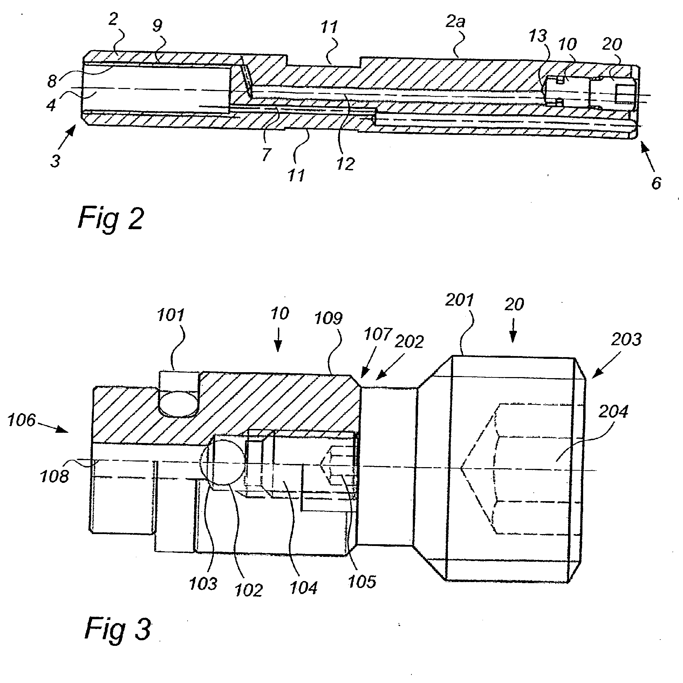

Fig. 2 shows a sectional view of a tool adapter 1. An axial hole 4 for receiving a tool is arranged at the first end 3 of the tool adapter. A clamping sleeve 8 is arranged in the axial hole 4 so that a pressure gap 9 is formed between the inner circumferential surface of the axial hole 4, which constitutes an outer sleeve, and the clamping sleeve 8. At the bottom and at the orifice of the axial hole 4 the clamping sleeve 8 is joined, by welding for example, to the outer sleeve 2, forming a seal. The pressure gap 9 is filled with a pressure medium (not shown). When a tool is inserted into the axial hole 4 and the pressure gap 9 is pressurised, this causes a basically radial change in the shape of clamping sleeve 8, thereby producing a pressure between the inner surface of the clamping sleeve 8 and the outer surface of the tool, so that the tool is fixed in the tool adapter 1. In the tool adapter, therefore, it is primarily the inner sleeve which undergoes a change of shape when the pressure gap is pressurised, whilst the shape of the outer sleeve 2 remains basically stable.

The piston 10 is arranged at the second end 6 of the adapter body 2a, and according to one embodiment may be displaceable in the longitudinal direction of the adapter body 2a. Arranging the piston at the second end of the tool adapter provides a tool adapter without a collar, which affords better access when machining a workpiece by mean of a tool accommodated in the tool adapter. It furthermore reduces the quantity of material needed to produce the tool adapter and simplifies the manufacturing of the adapter body.

The adapter body 2a may take the basic shape of an elongated cylinder, which extends axially from one end of the outer sleeve 2 and has basically the same outside diameter as the outer sleeve 2. The adapter body (and also the outer sleeve) are preferably largely free of radially projecting parts, such as a radially projecting flange or "collar", for example.

According to one embodiment the outer sleeve and the adapter body may be integrally formed and according to another embodiment the adapter body 2a and the outer sleeve 2 may be joined together by welding or a similar technique.

A cooling duct 7 may be arranged in the longitudinal direction of the adapter body 2a from the second end 6 of the tool adapter to the bottom of the axial hole 4, so that coolant fed through the tool holder or the chuck is transferred to a corresponding cooling duct 7 arranged in the tool.

A pressure medium duct 12 furthermore runs in the longitudinal direction of the adapter body 2a and connects the pressure gap 9 to a space 13 arranged at the second end 6 of the tool adapter, so that the space 13 has a fluid connection to the pressure gap 9.

A piston 10 is displaceably arranged in the space 13. In the embodiment shown the space is basically cylindrical and in its longitudinal extent runs parallel to the longitudinal direction of the adapter body 2a. Other shapes for the space 13 are not excluded. Displacement of the piston 10 in the space 13 serves to influence the pressure in the pressure gap 9, so that a tool accommodated in the axial hole 4 is fixed or released. The piston may be designed with a seal packing 101 (Fig. 3) intended to form a seal with the boundary surface of the space 13, which in the example shown takes the form of an inner circumferential surface of a cylinder.

The position of the piston 10 in the space 13 can be controlled by means of a control part 20, which basically comprises a screw threaded into the adapter body 2a, the first end of the screw bearing against the piston 10 and the second end being designed for engagement with a an operating tool (not shown), such as a screwdriver, an Allen key or the like. Screwing the control part 20 so that it is shifted to the left in Fig. 2 causes a displacement of the piston 20 to the left, which leads to an increase in the pressure in the pressure gap 9. Due to the pressure prevailing in the pressure gap, in the duct and in the space 13, screwing the control part 20 so that it is shifted to the right in Fig. 2 causes a displacement of the piston 20 to the right, which leads to a decrease in the pressure in the pressure gap 9.

For a more detailed description of the working of the tool-receiving end and specifically of the function of the clamping sleeve, reference should be made to WO94/26448. The description below is instead directed towards the mechanism for adjusting the quantity of pressure medium and the mechanism for pressurising the pressure medium.

Referring to Fig. 3, the piston 10 has a piston body 109, which according to the embodiment described is basically rotationally symmetrical and which has a first end 106, which is designed to define the space 13 (Fig. 2) containing the pressure medium, and a second end 107. Running through the piston body 109 is a duct 108 and in the duct a valve seat 103 is formed, which comprises a basically conical surface. It will be appreciated that the shape of the valve seat 103 can be selected according to what is found suitable. A valve body 102, here of spherical shape, is designed to interact with the valve seat 103, so that the duct 108 is sealed when the valve body 102 is pressed against the valve seat 103. A screw 104 threaded into the valve body 102 acts as support for the valve body 102 and is arranged so that when the screw 104 is turned so that it is displaced towards the left in Fig. 2 the valve body 102 is pressed against the valve seat 103, and when the screw is turned so that it is displaced towards the right in Fig. 2 the valve is opened, thereby permitting a fluid connection between the first and second ends 106, 107 of the piston body. The screw 104 may be provided with means 105 of engagement for operating tools, such as a screwdriver or an Allen key.

Initial adjustment of the pressure medium in the tool adapter produces a vacuum in the pressure gap 9, the duct 12 and the space 13, following which the pressure medium is replenished. The piston is then inserted into the space 13. For fine adjustment of the quantity of pressure medium in the tool adapter a bracing tool (not shown) is used, which holds the piston 10 steady in relation to the second end 6 of the tool adapter and which displaces the piston towards the bottom of the space 13, that is to say to the left in Fig. 2, the screw 104 being released so that the valve body leaves the valve seat 103. As a result of the pressure prevailing in the tool adapter, excess pressure medium is forced out through the duct 108, past the valve body 102 and trickles out via the play in the threads of the screw 104. This provides for precise adjustment of the quantity of pressure medium in the tool adapter.

When the required quantity of pressure medium is attained, the screw 104 is tightened, so that the valve body 102 forms a seal against the valve seat 103, following which the bracing tool is removed and the control part 20 is screwed tight in the second end 6 of the tool holder. The position of the piston 10 in the space 13 and hence the pressure in the tool adapter 1 can now be controlled by activation of the control part 20.

Referring to Fig. 3, the control part 20 has a control part body 201, a first end 202 of which is designed to interact with the second end 107 of the piston body, and the second end 203 of which is formed with means of engagement 204 for an operating tool.

The control part 20 is threaded into the adapter body 2a, so that screwing the control part causes it to be displaced to the right or to the left as discussed above in connection with Fig. 2.

According to one embodiment (not shown) the first end 202 of the control part 20 may have an opening to a duct, which opens into the engaging element 204 of the control part and which when both the piston 10 and the control part 20 are fitted in the adapter body 2a, as shown in Fig. 2, makes it possible to access the element 104 (Fig. 3) of the piston for controlling the valve, so that pressure medium can be drawn off as necessary. This embodiment is suitable where the piston 10 and the control part 20 are integrally formed in one piece.

Fig. 4a shows schematically how a shaft A and a hub N are coupled together by a hydraulically operated friction joint 1' according to one application as a hub-shaft connection. The terms "shaft" and "hub" here constitute schematic designations. The term "hub" here relates to any machine element. The term "shaft" correspondingly relates to a machine element of suitable cross-section, which when not in a locked condition is capable of performing axial and/or rotational movements relative to the hub.

Fig. 4b shows a schematic perspective view of the hydraulically operated friction joint 1'.

Figs. 4c shows a schematic sectional view of the hub-shaft connection 1'.

The friction joint in Figs. 4a-4d comprises an outer sleeve 2, designed to be fitted into the hub N. According to one embodiment the outer surface of the outer sleeve 2 is basically cylindrical, and thus designed to be received in a basically cylindrical recess or a hole in the hub N. The hub-shaft connection 1' furthermore comprises an inner sleeve 8, which functions as a clamping sleeve, which is basically concentric with the outer sleeve 2 and which has an inner surface designed to interact with the outer surface of the shaft A, when the shaft A is received in an axial hole 4 in the hub-shaft connection. When a pressure gap 9 arranged between the inner sleeve 8 and the outer sleeve 2 is pressurised, a pressure is produced both between the outer sleeve 2 and the hub N and between the inner sleeve 8 and the shaft A. The pressure is capable of producing friction locking of the shaft A in relation to the hub N.

A space 13 having a fluid connection to the pressure gap 9 is also arranged in the hub-shaft connection. In the embodiment shown the space is arranged in a flange 14 projecting from one short side of the hub-shaft connection. A piston 10 is displaceable in the space 13 so as to permit adjustment of the pressure in the pressure gap 9 by means of a control part 20, in a manner similar to that described above. In the hub-shaft connection, therefore, both the outer and the inner sleeve may be designed to have their shape modified by pressurisation of the pressure gap 9

It will be appreciated that the arrangement with piston 10 and control part 20 described above is not limited to the tool adapter and hub-shaft connection described above, but may also be applied to other types of hydraulically operated connections, such as those described in US 4,341,484, US 4,393,567, US 5,672,026, US 5,462,293, US 5,855,446, US 6,224,067, WO93/10928, WO98/32560 and WO98/46896, for example. Specifically, arrangements for the adjustment/regulation of pressure medium shown in the respective documents can be replaced by the piston with integral pressure medium adjustment valve described above.

Thus according to a second aspect an arrangement is provided for controlling the pressure in a hydraulically operated friction joint, which comprises a pressure chamber or a pressure gap 9, the arrangement furthermore comprising a piston 10, designed to be displaceably arranged in a space 13 communicating with the pressure chamber, the piston 10 having a first end 106 designed to define the space 13, and a second end 107. The arrangement further comprises a control part 20 for adjusting the position of the piston 10 in the space 13. The arrangement furthermore has a duct 108 extending between said first and second ends 106, 107 for adjustment of the pressure medium in the pressure chamber, by means of a controllable valve element 102, 103 arranged in the duct 108.

In the arrangement for controlling the pressure, the valve may comprise a valve body 102, which interacts with a valve seat 103 formed in the duct 108. The valve body may further comprise a basically spherical body and the valve seat a basically conical surface. The element 104 for controlling the valve element may be designed, with the piston 10 as bracing counter element, to control the interaction of the valve body 102 with the valve seat 103. The element 104 for controlling the valve element may comprise a screw threaded into the piston 10, one end of the screw interacting with the valve and the other end being designed for engagement with an operating tool.

According to one embodiment of the second aspect the control part 20 may be integrally formed with the piston 10. According to another embodiment of the second aspect the control part 20 and the piston 10 may be two separately formed parts interacting with one another.

It will be appreciated that the principles disclosed in this document are not limited to an adapter body 2, piston 10 and control part 20 of circular cross-section. Nor need the ducts 7, 12, 108 and the axial hole 104 have a circular cross-section. Furthermore, the valve body 102 need not have a spherical cross-section.

Finally it will be appreciated that the length of the tool adapter, the diameter of the axial hole and the diameter of the tool adapter can be adapted in order to achieve a required extension effect, required tool dimensions and required rigidity.

## Claims

1. Hydraulically operated friction joint (1, 1'), which comprises:
- an outer sleeve (2) designed to be inserted into a basically cylindrical recess (C, N);
- an inner sleeve (8) arranged in the outer sleeve (2) and designed to receive a basically cylindrical body (V, A);
- a pressure gap (9) formed between the inner sleeve (8) and the outer sleeve (2) and containing a pressure medium, which is designed when pressurised to produce a change in the radial shape of the inner sleeve (8), so that a pressure is produced between the inner sleeve (8) and the cylindrical body (V); and
- a piston (10) which through a fluid connection with the pressure gap (9) is designed to produce said pressurisation of the pressure gap (9),
**characterised in that**
elements (102, 103, 108) for adjusting the quantity of pressure medium are integrated into the piston (10).

2. Hydraulically operated friction joint (1, 1') according to Claim 1, **characterised in that** the piston (10) is displaceable in a space (13) having a fluid connection to the pressure gap (9), and that the piston (10) has a first end (106) designed to define the space (13), a second end (107), a duct (108) extending between said first second ends (106, 107) for adjusting/tapping off the pressure medium, and a controllable valve element (102, 103) arranged in the duct (108).

3. Hydraulically operated friction joint (1, 1') according to Claim 2, **characterised in that** the valve element comprises a valve body (102), which interacts with a valve seat (103) formed in the duct (108).

4. Hydraulically operated friction joint (1, 1') according to Claim 3, **characterised in that** the valve body (102) comprises a basically spherical body and the valve seat (103) comprises a basically conical surface.

5. Hydraulically operated friction joint (1, 1') according to Claim 2, **characterised in that** the valve element (102, 103) has a control element (104) designed, with a body (109) of the piston (10) as bracing counter element, to control the interaction of the valve body (102) with the valve seat (103).

6. Hydraulically operated friction joint (1, 1') according to Claim 5, **characterised in that** the element (104) for controlling the valve comprises a screw threaded into the piston (10), one end of the screw interacting with the valve body (102) and the other end being designed for engagement with an operating tool.

7. Hydraulically operated friction joint (1, 1') according to any one of the preceding Claims, further comprising a control part (20) for adjusting the position of the piston (10) in the space (13).

8. Hydraulically operated friction joint (1, 1') according to any one of the preceding Claims, **characterised in that** the control part (20) is integrally formed with the piston (10).

9. Hydraulically operated friction joint (1, 1') according to any one of the preceding Claims, **characterised in that** the control part (20) and the piston (10) are two separately formed parts interacting with one another.

10. Hydraulically operated friction joint (1) according to any one of the preceding Claims, designed as a tool adapter, the outer sleeve being integrated with an elongated adapter body (2a), so that a first end (3) of the tool adapter (1) has an axial hole (4), in which said inner sleeve (8) is arranged as a clamping sleeve, and which is designed to receive a tool (V), so that when the pressure gap (9) is pressurised the tool (V) is fixed in the axial hole (4); and so that a second end (6) of the tool adapter is designed to be fixed in a tool holder (C).

11. Hydraulically operated friction joint (1') according any one of Claims 1 to 9, designed as a hub-shaft connection, the outer sleeve (2) and the inner sleeve (8) basically being concentrically arranged, having basically the same axial length and being designed to produce a respective pressure between the outer sleeve (2) and a hub (N) arranged around this, and between the inner sleeve (8) and a shaft (A) arranged therein.

## Patentansprüche

1. Hydraulisch betätigte Reibverbindung (1,1') mit
- einer äußeren Hülse (2), konstruiert, um in eine im Wesentlichen zylindrische Vertiefung (C, N) eingesetzt zu werden;
- einer inneren Hülse (8), die in der äußeren Hülse (2) angeordnet ist und konstruiert ist, einen im Wesentlichen zylindrischen Körper (V, A) aufzunehmen;
- einem Druckspalt (9), welcher zwischen der inneren Hülse (8) und der äußern Hülse (2) ausgebildet ist, und ein Druckmedium enthält, welches konstruiert ist, eine Änderung bezüglich der radialen Form der inneren Hülse (8) zu erzeugen, wenn es unter Druck gesetzt wird, so dass ein Druck zwischen der inneren Hülse (8) und dem zylindrischen Körper (V, A) erzeugt wird;
- einem Kolben (10), welcher über eine Fluidverbindung mit dem Druckspalt (9) konstruiert ist, um die Druckbeaufschlagung des Druckspaltes (9) zu erzeugen,
**dadurch gekennzeichnet, dass**
Elemente (102, 103, 108) zur Einstellung der Menge des Druckmittels in den Kolben (10) eingebaut sind.

2. Hydraulisch betätigte Reibverbindung (1, 1') nach Anspruch 1, **dadurch gekennzeichnet, dass** der Kolben (10) in einem Raum (13), der eine Fluidverbindung zu dem Druckspalt (9) aufweist, verschieblich angeordnet ist, und dass der Kolben (10) ein erstes Ende (106) hat, welches konstruiert ist, den Raum (13) zu definieren, und ein zweites Ende (107), eine Düse (108), die sich zwischen den ersten und zweiten Enden (106, 107) erstreckt, um das Druckmedium einzustellen/abzulassen, und ein steuerbares Ventilelement (102, 103), welches in der Vertiefung (108) angeordnet ist.

3. Hydraulisch betätigte Reibverbindung (1, 1') gemäß Anspruch 2, **dadurch gekennzeichnet, dass** das Ventilelement ein Ventilkörper (102) umfasst, welcher mit einem Ventilsitz (103) zusammenwirkt, der in der Düse (108) ausgebildet ist.

4. Hydraulisch betätigte Reibverbindung (1, 1') nach Anspruch 3, **dadurch gekennzeichnet, dass** der Ventilkörper (102) ein im Wesentlichen kreisförmigen Körper umfasst, und der Ventilsitz (103) ein im Wesentlichen konische Oberfläche umfasst.

5. Hydraulisch betätigte Reibverbindung (1, 1') nach Anspruch 2, **dadurch gekennzeichnet, dass** das Ventilelement (102, 103) ein Steuerungselement (104) mit einem Körper (109) des Kolbens (10) als Gegenspannelement ausgebildet ist, um das Zusammenwirken des Ventilkörpers (102) mit dem Ventilsitz (103) zu steuern.

6. Hydraulisch betätigte Reibverbindung (1, 1') nach Anspruch 5, **dadurch gekennzeichnet, dass** das Element (104) zur Steuerung des Ventils eine Schraube umfasst, die in den Kolben (10) eingeschraubt ist, wobei ein Ende der Schraube mit dem Ventilkörper (102) zusammenwirkt und das andere Ende konstruiert ist, mit einem Betätigungswerkzeug verbunden zu werden.

7. Hydraulisch betätigte Reibungsverbindung (1, 1') nach einem der vorhergehenden Ansprüche, **dadurch gekennzeichnet, dass** es ferner einen Steuerungsteil (20) umfasst, um die Position des Kolbens (10) in dem Raum (13) einzustellen.

8. Hydraulisch betätigte Reibverbindung (1, 1') nach einem der vorhergehenden Ansprüche, **dadurch gekennzeichnet, dass** der Steuerungsteil (20) einteilig mit dem Kolben (10) ausgebildet ist.

9. Hydraulisch betätigte Reibverbindung (1, 1') nach einem der vorhergehenden Ansprüche, **dadurch gekennzeichnet, dass** der Steuerungsteil (20) und der Kolben (10) zwei voneinander getrennt ausgebildete Teile sind, die miteinander zusammenwirken.

10. Hydraulisch betätigte Reibverbindung (1) nach einem der vorhergehenden Ansprüche, konstruiert als ein Werkzeugadapter, wobei die äußere Hülse in einen gestreckten Adapterkörper (2a) eingebaut ist, so dass ein erstes Ende (3) des Werkzeugadapters (1) eine axiale Öffnung (4) hat, in welcher die innere Hülse (8) als eine Spannhülse angeordnet ist, und welche konstruiert ist, ein Werkzeug (V) aufzunehmen, so dass, wenn der Druckspalt (9) unter Druck gesetzt wird, das Werkzeug (V) in der axialen Öffnung (4) befestigt ist; und so dass ein zweites Ende (6) des Werkzeugadapters konstruiert ist, in einem Werkzeughalter (C) befestigt zu werden.

11. Hydraulisch betätigte Reibverbindung (1') nach einem der Ansprüche 1 bis 9, als Wellen- Nabenverbindung ausgeführt, wobei die äußere Hülse (2) und die innere Hülse (8) im Wesentlichen konzentrisch angeordnet sind, und im Wesentlichen die gleiche axiale Länge aufweisen und konstruiert sind, einen jeweiligen Druck zwischen der äußeren Hülse (2) und einer Nabe (N), die um dieses herum und zwischen der inneren Hülse (8) an einer darin ausgebildeten Welle (A) ausgebildet ist, zu erzeugen.

## Revendications

1. Joint à frottement à actionnement hydraulique (1, 1'), comprenant :
- un manchon externe (2) conçu pour être inséré dans un évidement globalement cylindrique (C, N) ;
- un manchon interne (8) agencé dans le manchon externe (2) et conçu pour recevoir un corps globalement cylindrique (V, A) ;
- un intervalle de pression (9) formé entre le manchon interne (8) et le manchon externe (2) et contenant un milieu de pression, qui est conçu lorsqu'il est sous pression pour produire un changement dans la forme radiale du manchon interne (8), de sorte qu'une pression soit produite entre le manchon interne (8) et le corps cylindrique (V) ; et
- un piston (10) qui, par l'intermédiaire d'un raccord fluidique avec l'intervalle de pression (9), est conçu pour produire ladite mise sous pression de l'intervalle de pression (9),
**caractérisé en ce que**
des éléments (102, 103, 108) pour ajuster 1a quantité de milieu de pression sont intégrés dans le piston (10).

2. Joint à frottement à actionnement hydraulique (1, 1') selon la revendication 1, **caractérisé en ce que** le piston (10) peut être déplacé dans un espace (13) ayant un raccord fluidique avec l'intervalle de pression (9), et **en ce que** le piston (10) a une première extrémité (106) conçue pour définir l'espace (13), une seconde extrémité (107), un conduit (108) s'étendant entre lesdites première et seconde extrémités (106, 107) pour ajuster/recueillir le milieu de pression, et un élément de soupape réglable (102, 103) agencé dans le conduit (108).

3. Joint à frottement à actionnement hydraulique (1, 1') selon la revendication 2, **caractérisé en ce que** l'élément de soupape comprend un corps de soupape (102), en interaction avec un siège de soupape (103) formé dans le conduit (108).

4. Joint à frottement à actionnement hydraulique (1, 1') selon la revendication 3, **caractérisé en ce que** le corps de soupape (102) comprend un corps globalement sphérique et le siège de soupape (103) comprend une surface globalement conique.

5. Joint à frottement à actionnement hydraulique (1, 1') selon la revendication 2, **caractérisé en ce que** l'élément de soupape (102, 103) a un élément de réglage (104) conçu, avec un corps (109) du piston (10) en tant que contre-élément de calage, pour régler l'interaction du corps de soupape (102) avec le siège de soupape (103).

6. Joint à frottement à actionnement hydraulique (1, 1') selon la revendication 5, **caractérisé en ce que** l'élément (104) pour régler la soupape comprend une vis filetée dans le piston (10), une extrémité de la vis étant en interaction avec le corps de soupape (102) et l'autre extrémité étant conçue pour entrer en prise avec un outil de commande.

7. Joint à frottement à actionnement hydraulique (1, 1') selon l'une quelconque des revendications précédentes, comprenant en outre une pièce de réglage (20) pour ajuster la position du piston (10) dans l'espace (13).

8. Joint à frottement à actionnement hydraulique (1, 1') selon l'une quelconque des revendications précédentes,
**caractérisé en ce que** la pièce de réglage (20) est formée de manière solidaire au piston (10).

9. Joint à frottement à actionnement hydraulique (1, 1') selon l'une quelconque des revendications précédentes, **caractérisé en ce que** la pièce de réglage (20) et le piston (10) sont deux pièces formées séparément interagissant l'une avec l'autre.

10. Joint à frottement à actionnement hydraulique (1, 1') selon l'une quelconque des revendications précédentes, conçu en tant qu'adaptateur d'outil, le manchon externe étant intégré à un corps d'adaptateur allongé (2a), de sorte qu'une première extrémité (3) de l'adaptateur d'outil (1) ait un orifice axial (4), dans lequel ledit manchon interne (8) est agencé en tant que manchon de serrage, et qui est conçu pour recevoir un outil (V), de sorte que lorsque l'intervalle de pression (9) est mis sous pression, l'outil (V) soit fixé dans l'orifice axial (4) ; et de sorte qu'une seconde extrémité (6) de l'adaptateur d'outil soit conçue pour être fixée dans un porte-outil (C).

11. Joint à frottement à actionnement hydraulique (1, 1') selon l'une quelconque des revendications 1 à 9, conçu en tant que raccord moyeu-arbre, le manchon externe (2) et le manchon interne (8) étant agencés de manière globalement concentrique, ayant globalement la même longueur axiale et étant conçus pour produire une pression respective entre le manchon externe (2) et un moyeu (N) agencé autour de celui-ci, et entre le manchon interne (8) et un arbre (A) agencé à l'intérieur de celui-ci.
